# EUROPÄISCHE PATENTSCHRIFT

(11) **EP 2 182 299 B1**
(45) Veröffentlichungstag und Bekanntmachung des Hinweises auf die Patenterteilung: **07.02.2018**
(21) Anmeldenummer: 09010430.8
(22) Anmeldetag: 13.08.2009
(51) Int. Cl.: F24F 5/00, F24F 13/068, F24D 3/16

(54) **Klimaeinrichtung**
Air conditioning device
Dispositif de climatisation

(30) Priorität: 31.10.2008 DE 102008054181
(43) Veröffentlichungstag der Anmeldung: 05.05.2010
(73) Patentinhaber: Frenger Systemen BV Heiz- und Kühltechnik GmbH, 64823 Gross-Umstadt (DE)
(72) Erfinder: Menge, Hans-Werner, Dipl.-Ing., 64823 Groß-Umstadt (DE)
(74) Vertreter: Keil & Schaafhausen Patent- und Rechtsanwälte PartGmbB

(56) Entgegenhaltungen:
- EP-A1- 1 085 276
- EP-A1- 1 167 889
- DE-A1- 2 138 667
- DE-A1- 10 043 968
- DE-U1- 20 103 146

## Beschreibung

Die Erfindung betrifft eine Klimaeinrichtung zum Temperieren und Lüften von Räumen mit einem Deckenstrahlflächenaufbau, der mehrere von einem Wärmeübertragungsmedium zu durchströmende Rohre eines Rohrregisters sowie dem zu temperierenden Raum zugewandten Strahlbleche aufweist.

Ein solcher Strahlflächenaufbau ist beispielsweise aus der EP 1 630 480 A1 bekannt. Diese bekannten Heiz- oder Kühlreinrichtungen werden ausschließlich zum Temperieren eines Raumes eingesetzt, wobei die Zufuhr von Frischluft zu dem zu temperierenden Raum über separate Einrichtungen oder beispielsweise über Fenster und Türen erfolgt.

Darüber hinaus ist es aus der DE 197 30 180 A1 bekannt, über eine zu der Decke des zu temperierenden Raumes im Wesentlichen parallele Zwischendecke aus porösen Akustikplatten einen Hohlraum zu bilden, in welchen vorgewärmte Luft eingebracht wird, die dann durch die Zwischendecke in den zu temperierenden Raum abgegeben wird. Diese Lösung hat sich in der Praxis als verbesserungswürdig herausgestellt, da ein Großteil der Wärmeenergie der temperierten Luft an die den Hohlraum bildenden Wände sowie die Decke des Raumes abgegeben werden. Darüber hinaus ist ein solcher Aufbau in großen Hallen oder Räumen nicht sinnvoll einsetzbar, da ein zu großer Abstand zwischen der meist in mehreren Metern Höhe über den Boden gelegenen Decke und dem bodennäheren zu temperierenden Bereich liegt. Die erwärmte Luft erreicht daher den zu erwärmenden Bereich des Raumes nicht oder zumindest nicht ausreichend.

In der DE 2 138 667 A wird ebenfalls eine Klimaeinrichtung offenbart, in welcher durch eine oben aufliegende Isolierstoffplatte ein Frischluftkanal gebildet wird, sodass auch hier Partikel des Isolierstoffes in die Frischluft gelangen können. Weiterhin werden die Deckenstrahlplatten direkt an der Raumdecke angebracht und die Frischluftzuführung wird innerhalb der Raumdecke realisiert. Dies verkompliziert die Montage und insbesondere die Nachrüstung der Deckenstrahlplatten unnötig.

Es ist demgegenüber eine Aufgabe der vorliegenden Erfindung eine Klimaeinrichtung der eingangs genannten Art bereitzustellen, die auch in hohen Hallen oder Räumen ein wirkungsvolles Temperieren und gleichzeitig ein Lüften ermöglicht und schnell und einfach montiert werden kann.

Diese Aufgabe wird erfindungsgemäß mit einer Klimaeinrichtung nach Anspruch 1 gelöst. im Wesentlichen dadurch gelöst, dass zumindest ein Abschnitt eines Strahlblechs zusammen mit wenigstens einem Kanalsegment eine das Rohrregister zumindest bereichsweise umgebende Einhausung bilden, die mit einem Luftkanalanschluss zur Zufuhr von Frischluft in die Einhausung und dem zu temperierenden Raum zugewandten Auslassöffnungen in wenigstens einem der Strahlbleche zum Abgeben von temperierter Luft in den Raum versehen ist, und an seitlichen Strahlblechen Befestigungsösen zum Befestigen der Klimaeinrichtung an einer Decke eines zu temperierenden Raumes vorgesehen sind. Die Frischluft wird dabei durch den Kontakt mit den von dem Wärmeübertragungsmedium durchströmten Rohren sowie durch den Kontakt mit Strahlblechen temperiert und kann somit je nach Einsatzzweck gekühlt oder erwärmt an den Raum abgegeben werden. Gleichzeitig bildet die erfindungsgemäße Klimaeinrichtung eine beispielsweise modular aufgebaute Einheit, die in nahezu beliebiger Höhe innerhalb eines zu temperierenden Raumes an die Einsatzbedingungen angepasst installiert werden kann. Auf diese Weise kann beispielsweise ein Arbeitsbereich innerhalb einer Halle definiert temperiert und belüftet werden.

Nach einer bevorzugten Ausführungsform ist die Einhausung durch mehrere Strahlbleche und/oder durch mehrere Kanalsegmente gebildet, wobei die Kanalsegmente auf der dem zu temperierenden Raum abgewandten Seite der Strahlbleche vorgesehen sind. Die Strahlbleche bestehen dabei vorzugsweise aus einem metallischen Material, insbesondere aus Blech, das zur Abstrahlung von der über die Rohre in die Strahlbleche eingebrachten Wärmeenergie geeignet ist. Die Kanalsegmente können ebenfalls aus einem metallischen Werkstoff oder beispielsweise aus Kunststoff bestehen.

Um einen definierten Austritt der Frischluft in einem zu belüftenden Bereich eines Raumes zu erzielen, ist die Einhausung vorzugsweise mit Ausnahme des Luftkanalanschlusses und der Auslassöffnungen im Wesentlichen luftdicht ausgebildet. Dies bedeutet nicht, dass die Einhausung vollständig hermetisch abgeschlossen sein muss. Vielmehr ist es ausreichend, wenn der wesentliche über den Luftkanalanschluss zugeführte Frischluftstrom durch die Auslassöffnungen aus der Einhausung abgegeben wird.

In vielen Anwendungsfällen wird es bevorzugt, wenn über die Klimaeinrichtung die über das Rohrregister zugeführte Wärme möglichst ausschileßlich definiert an einen unterhalb der Klimaeinrichtung innerhalb des Raumes gelegenen Bereich, der beispielsweise ein Arbeitsbereich innerhalb einer Halle sein kann, abgegeben wird. In diesen Fällen wird es bevorzugt, wenn auf der den Strahlblechen abgewandten Seite des Rohrregisters in der Einhausung eine Isolierschicht vorgesehen ist. Diese Isolierschicht kann beispielsweise im Bereich des Luftkanalanschlusses eine Durchbrechung aufweisen, um den Eintritt von Frischluft in die Einhausung zu ermöglichen.

Um eine ausreichende Temperierung der über die Klimaeinrichtung zugeführten Frischluft zu erreichen, sind die Auslassöffnungen auf wenigstens einer dem Luftkanalanschluss abgewandten Seite der Einhausung angeordnet. So kann die Einhausung beispielsweise über einen zentralen Luftkanalanschluss verfügen, während Auslassöffnungen im Bereich von seitlichen Rändern der Klimaeinrichtung vorgesehen sind. Die Auslassöffnungen können beispielsweise durch perforierte Bereiche innerhalb der Strahlbleche ausgebildet sein.

Für eine bessere Verteilung der Frischluft in verschiedene Bereiche eines zu temperierenden und zu belüftenden Raumes können in dem Deckenstrahlflächenaufbau mehreren Einhausungen und/oder mehreren zumindest näherungsweise luftdicht voneinander abgetrennten Abschnitte einer Einhausung zugeordnet sein, wobei jede Einhausung bzw. jeder Abschnitt jeweils einen Luftkanalanschluss und jeweils Auslassöffnungen aufweist. Grundsätzlich ist es möglich, dass der Deckenstrahlflächenaufbau nur in einem oder in mehreren Abschnitten eine Einhausung zur Zufuhr von Frischluft aufweist. Es ist jedoch auch möglich, dass der gesamte Deckenstrahlflächenaufbau mit einer oder mehreren Einhausungen versehen ist, so dass über im Wesentlichen die gesamte Größe des Deckenstrahlflächenaufbaus Frischluft in den zu temperierenden und belüftenden Raum abgegeben wird.

Nach einer besonders bevorzugten Ausführungsform der vorliegenden Erfindung steht der wenigstens eine Luftkanalanschluss mit einem Wärmetauscher in Strömungsverbindung, wobei in dem Wärmetauscher die der Klimaeinrichtung zugeführte Frischluft insbesondere durch Abluft aus dem zu temperierenden Raum vorgewärmt wird. Auf diese Weise lässt sich die in der Abluft enthaltene Wärmeenergie sinnvoll zur Vorwärmung der in die Einhausung geleiteten Frischluft nutzen.

Die Strahlbleche können derart angeordnet und ausgebildet sein, dass sie die Rohre des Rohrregisters auf der dem zu temperierenden Raum zugewandten Seite im Wesentlichen vollständig abdecken. Mit anderen Worten bilden die Strahlbleche der Klimaeinrichtung von dem zu temperierenden Raum aus gesehen eine im Wesentlichen geschlossene Fläche. In diesem Fall stehen die Strahlbleche beispielsweise über Randaufkantungen mit den Rohren des Rohrregisters in wärmeleitender Verbindung, so dass die Strahlbleche ausreichend durch die Rohre temperiert werden können.

Nach einer alternativen Ausführungsform der Erfindung sind die Strahlbleche derart angeordnet und ausgebildet, dass zwischen den Strahlblechen Abstrahlbereiche vorgesehen sind, in denen die Rohre des Rohrregisters unmittelbar mit dem zu temperierenden Raum in Kontakt stehen. In diesem Fall können die Rohre beispielsweise im Wesentlichen in einer Ebene mit den Strahlblechen liegen, wobei die vorzugsweise streifenartigen Strahlbleche über abgekantete Abschnitte an den Rohren wärmeleitend anliegen. In diesem Fall sind die Rohre des Rohrregisters von dem zu temperierenden Raum aus zu sehen. Diese Ausgestaltung kann die Wärmeabstrahlung der erfindungsgemäßen Klimaeinrichtung verbessern.

Grundsätzlich können die Strahlbleche in beliebiger Weise mit den Rohren verbunden werden, sofern eine ausreichende Wärmeübertragung zwischen den Rohren und den Strahlblechen sichergestellt wird. Hierzu können die Strahlbleche beispielsweise zwischen den Rohren eingeklemmt bzw. eingespannt werden oder beispielsweise durch Befestigungsclips an den Rohren gehalten werden. Für die erfindungsgemäße Klimaeinrichtung wird es jedoch bevorzugt, wenn die Strahlbleche mit den Rohren insbesondere zu einer steifen Einheit verbunden sind, beispielsweise durch eine Verschweißung der Strahlbleche und der Rohre. Zusätzlich können Querprofile in einer Richtung senkrecht zu der Haupterstreckungsrichtung der Rohre vorgesehen und ebenfalls mit den Strahlblechen und/oder den Rohren verbunden sein. Hierdurch weist die Klimaeinrichtung eine ausreichende Steifigkeit auf, um die Einhausung zu tragen.

Bei bekannten Deckenstrahlflächenaufbauten ist häufig eine Aufhängekonstruktion auf der den Strahlblechen abgewandten Seite des Rohrregisters vorgesehen. Wenn bei der erfindungsgemäßen Klimaeinrichtung ein Großteil der dem zu temperierenden Raum abgewandten Seite der Strahlbleche von der Einhausung bedeckt ist, ist es erfindungsgemäß vorgesehen, dass an seitlichen Strahlblechen Befestigungsösen zum Befestigen der Klimaeinrichtung an einer Decke eines zu temperierenden Raumes vorgesehen sind.

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: eine Draufsicht auf die in Einbaulage obere Seite der erfindungsgemäßen Klimaeinrichtung,
- Fig. 2: eine Draufsicht auf die in Einbaulage untere Seite der erfindungsgemäßen Klimaeinrichtung und
- Fig. 3: in Seitenansicht die erfindungsgemäße Klimaeinrichtung.

Die in den Figuren dargestellte Klimaeinrichtung 1 ist im Wesentlichen durch einen Deckenstrahlflächenaufbau und eine Einhausung gebildet. Der Deckenstrahlflächenaufbau weist dabei mehrere Rohre 2 auf, die sich im Wesentlichen parallel zueinander erstrecken und über einen Sammelkasten 3 mit Anschlussmuffen sowie einen Umlenksammelkasten 4 mit einer Entlüftungsöffnung 5 zu einem Rohrregister verbunden sind. Die Rohre 2 des Rohrregisters werden von einem Wärmeübertragungsmedium, beispielsweise Wasser, durchströmt.

Weiter weist der Deckenstrahlflächenaufbau mehrere streifenförmige Strahlbleche 6 auf, die in der dargestellten Ausführungsform im Wesentlichen zwischen den Rohren 2 und in Wärmkontakt mit diesen vorgesehen sind. Hierzu können die Strahlbleche 6 jeweils mit Sicken versehen sein, in welchen ein Abstrahlbereich der Rohre 2 unmittelbar dem zu temperierenden Raum zugewandt ist. Die Ausbildung des Deckenstrahlaufbaus kann dabei beispielsweise ähnlich der EP 1 630 480 A1 erfolgen, auf die vollumfänglich Bezug genommen wird.

Auf der den Strahlblechen 6 abgewandten Seite des Rohrregisters ist eine in der dargestellten Ausführungsform aus mehreren Kanalsegmenten 7 gebildete Einhausung vorgesehen, die zusammen mit den Strahlblechen 6 einen im Wesentlichen geschlossenen Luftkanal bildet. Hierzu sind zumindest die äußeren Strahlbleche 6 mit einer Randaufkantung 8 versehen, die mit den Kanalsegmenten 7 verbindbar ist. Die Einhausung ist dabei derart ausgebildet, dass das Rohrregisters im Wesentlichen in der Einhausung aufgenommen ist. Unabhängig davon können jedoch die Abstrahlbereiche der Rohre 2 zwischen den Strahlblechen 6 aus der Einhausung herausragen. Abweichend von der in den Figuren gezeigten Ausführungsform kann die Einhausung auch ein einstückiges Element aufweisen, das die dem zu temperierenden Raum abgewandte Seite der Strahlbleche 6 ganz oder teilweise abdeckt.

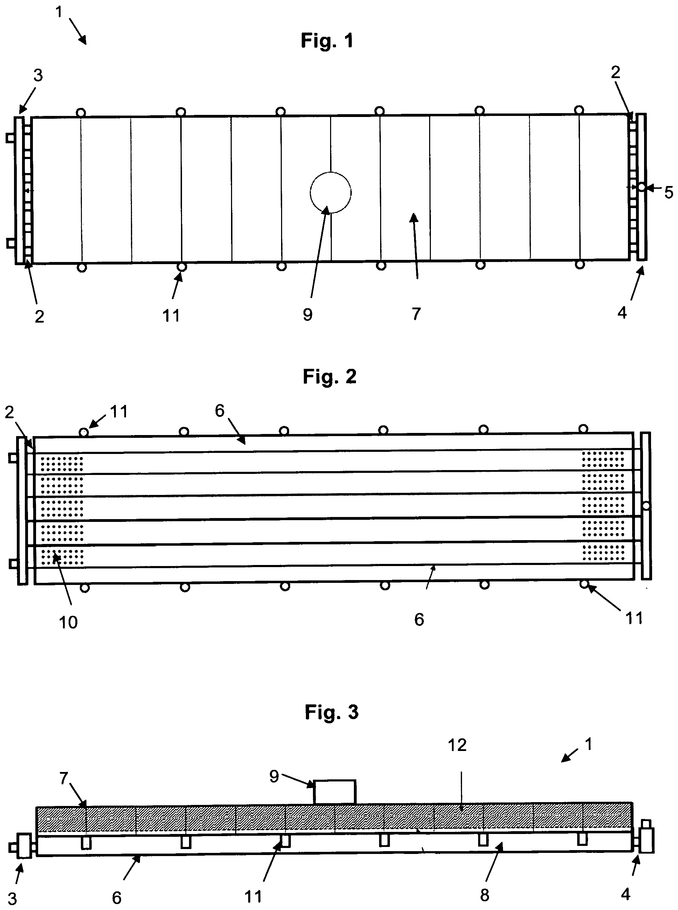

Aus den Figuren 1 und 3 ist ersichtlich, dass die Einhausung mit einem Luftkanalanschluss 9 versehen ist, der auf der den Strahlblechen 6 abgewandten Seite angeordnet ist. Über den Luftkanalanschluss 9 kann Frischluft, die ggf. über einen Wärmetauscher vorgewärmt ist, in die Einhausung eingeblasen werden. Hierbei erwärmt sich die Frischluft durch den Kontakt mit den Rohren 2 und den Strahlblechen 6.

Wie aus Figur 2 ersichtlich ist, sind einige der Strahlbleche 6 mit Auslassöffnungen 10 versehen, über welche die in der Einhausung temperierte Frischluft in den in Einbaulage unterhalb der Klimaeinrichtung gelegenen Raum abgegeben werden kann. Die Auslassöffnungen 10 sind in der dargestellten Ausführungsform durch eine Perforation in den einander gegenüberliegenden Randbereichen der Strahlbleche 6 ausgebildet. Damit liegen die Auslassöffnungen 10 entfernt von dem in der dargestellten Ausführungsform mittig angeordneten Luftkanalanschluss 9. Die in die Einhausung eingebrachte Frischluft kann somit ausreichend temperiert werden, bevor diese durch die Auslassöffnungen 10 aus der Einhausung austritt.

In der in den Figuren 1 bis 3 dargestellten Ausführungsform sind sämtliche Strahlbleche im Wesentlichen vollständig durch die Kanalsegmente 7 abgedeckt, so dass sich die Einhausung im Wesentlichen durch die gesamte Länge und Breite des Deckenstrahlflächenaufbaus erstreckt. Alternativ hierzu ist es jedoch auch möglich, dass die Einhausung nur in einem Abschnitt des Deckenstrahlflächenaufbaus vorgesehen ist.

Die Befestigung der Klimaeinrichtung 1 in einem zu temperierenden und zu belüftenden Raum kann in an sich bekannter Weise über eine Abhängung erfolgen. Hierzu können auf der dem zu temperierenden Raum abgewandten Seite des Rohrregisters bzw. der Strahlbleche 6 entsprechende Halteeinrichtungen vorgesehen sein. In der dargestellten Ausführungsform sind an den seitlichen Strahlblechen 6 mehrere Befestigungsösen 11 angebracht, die zum Aufhängen der Klimaeinrichtung 1 dienen.

Zusätzlich können auf der den Strahlblechen 6 abgewandten Seite der Klimaeinrichtung 1 Kabelkanäle vorgesehen sein. Diese können zur Versorgung von beispielsweise in den Strahlblechen 6 vorgesehenen Beleuchtungselementen (in den Figuren nicht gezeigt) oder zur Stromversorgung von Geräten innerhalb des zu temperierenden Raumes dienen.

In Figur 3 ist zudem eine Isolierschicht 12 angedeutet, die innerhalb der Einhausung auf der den Strahlblechen 6 abgewandten Seite des Rohrregisters vorgesehen ist. Um die Zufuhr von Luft aus dem Luftkanalanschluss 9 in die Einhausung zu ermöglichen, kann in der Isolierschicht 12 eine entsprechende Öffnung vorgesehen sein.

### Bezugszeichenliste:

- 1: Klimaeinrichtung
- 2: Rohr
- 3: Sammelkasten mit Anschlussmuffen
- 4: Umlenksammelkasten
- 5: Entlüftung
- 6: Strahlblech
- 7: Kanalsegment
- 8: Randaufkantung
- 9: Luftkanalanschluss
- 10: Auslassöffnung
- 11: Befestigungsöse
- 12: Isolierschicht

## Patentansprüche

1. Klimaeinrichtung zum Temperiern und Belüften von Räumen mit einem Deckenstrahlflächenaufbau, der mehrere von einem Wärmeübertragungsmedium zu durchströmende Rohre (2) eines Rohrregisters sowie dem zu temperierenden Raum zugewandte Strahlbleche (6) aufweist, wobei zumindest ein Abschnitt eines Strahlblechs (6) zusammen mit wenigstens einem Kanalsegment (7) eine das Rohrregister zumindest bereichsweise umgebende Einhausung bilden, die mit einem Luftkanalanschluss (9) zur Zufuhr von Frischluft in die Einhausung und mit dem zu temperierenden Raum zugewandten Auslassöffnungen (10) in wenigstens einer der Strahlbleche (6) zum Abgeben von temperierter Luft in den Raum versehen ist, **dadurch gekennzeichnet, dass** an seitlichen Strahlblechen (6) Befestigungsösen (11) zum Befestigen der Klimaeinrichtung an einer Decke eines zu temperierenden Raumes vorgesehen sind, und dass der wenigstens eine Luftkanalanschluss (9) mit einem Wärmetauscher zum Vorwärmen von der Einhausung zugeleiteter Frischluft durch Abluft in Strömungsverbindung steht.

2. Klimaeinrichtung nach Anspruch 1, **dadurch gekennzeichnet, dass** die Einhausung durch mehrere Strahlbleche (6) und durch mehrere Kanalsegmente (7) gebildet ist, wobei die Kanalsegmente (7) auf der dem zu temperierenden Raum abgewandten Seite der Strahlbleche (6) vorgesehen sind.

3. Klimaeinrichtung nach Anspruch 1 oder 2, **dadurch gekennzeichnet, dass** die Einhausung mit Ausnahme des Luftkanalanschlusses (9) und der Auslassöffnungen (10) im Wesentlichen luftdicht ist.

4. Klimaeinrichtung nach einem der vorhergehenden Ansprüche, **dadurch gekennzeichnet, dass** auf der den Strahlblechen (6) abgewandten Seite des Rohrregisters in der Einhausung eine Isolierschicht (12) vorgesehen ist.

5. Klimaeinrichtung nach einem der vorhergehenden Ansprüche, **dadurch gekennzeichnet, dass** die Auslassöffnungen (10) auf wenigstens einer dem Luftkanalanschluss (9) abgewandten Seite der Einhausung angeordnet sind.

6. Klimaeinrichtung nach einem der vorhergehenden Ansprüche, **dadurch gekennzeichnet, dass** dem Deckenstrahlflächenaufbau mehrere Einhausungen und/oder mehrere zumindest näherungsweise luftdicht voneinander abgetrennte Abschnitte einer Einhausung zugeordnet sind, wobei jede Einhausung bzw. jeder Abschnitt jeweils einen Luftkanalanschluss (9) und jeweils Auslassöffnungen (10) aufweist.

7. Klimaeinrichtung nach einem der vorhergehenden Ansprüche, **dadurch gekennzeichnet, dass** die Strahlbleche (6) die Rohre (2) des Rohrregisters auf der dem zu temperierenden Raum zugewandten Seite im Wesentlichen vollständig abdecken.

8. Klimaeinrichtung nach einem der Ansprüche 1 bis 6, **dadurch gekennzeichnet, dass** die Strahlbleche (6) derart angeordnet und ausgebildet sind, dass zwischen den Strahlblechen (6) Abstrahlbereiche gebildet sind, in denen die Rohre (2) des Rohrregisters unmittelbar mit dem zu temperierenden Raum in Kontakt stehen.

9. Klimaeinrichtung nach einem der vorhergehenden Ansprüche, **dadurch gekennzeichnet, dass** die Strahlbleche (6) mit den Rohren (2) des Rohrregisters sowie ggf. mit Querprofilen verbunden, insbesondere verschweißt, sind.

## Claims

1. An air-conditioning device for the temperature control and ventilation of rooms, comprising a ceiling radiating surface structure which has a plurality of pipes (2) of a pipe register, a heat transmission medium to flow therethrough, and radiating plates (6) facing the room to be temperature-controlled, wherein at least one portion of a radiating plate (6) together with at least one channel segment (7) form a housing which at least partially surrounds the pipe register and which is provided with an air channel connection (9) for the supply of fresh air into the housing and with outlet openings (10), which face the room to be temperature-controlled, in at least one of the radiating plates (6) for discharging temperature-controlled air into the room, **characterised in that** fastening eyes (11) are provided on lateral radiating plates (6) for fastening the air-conditioning device to a ceiling of a room to be temperature-controlled, and **in that** the at least one air channel connection (9) is in fluidic connection with a heat exchanger for preheating fresh air supplied from the housing by means of exhaust air.

2. The air-conditioning device according to Claim 1, **characterised in that** the housing is formed by a plurality of radiating plates (6) and by a plurality of channel segments (7), wherein the channel segments (7) are provided on the side of the radiating plates (6) remote from the room to be temperature-controlled.

3. The air-conditioning device according to Claim 1 or 2, **characterised in that** the housing is substantially airtight with the exception of the air channel connection (9) and the outlet openings (10).

4. The air-conditioning device according to one of the preceding claims, **characterised in that** an insulating layer (12) is provided in the housing on the side of the pipe register remote from the radiating plates (6) .

5. The air-conditioning device according to one of the preceding claims, **characterized in that** the outlet openings (10) are arranged on at least one side of the housing remote from the air channel connection (9).

6. The air-conditioning device according to one of the preceding claims, **characterised in that** a plurality of housings and/or a plurality of portions of a housing which are separated from one another in an at least approximately airtight manner are assigned to the ceiling radiating surface structure, wherein each housing and/or each portion in each case has an air channel connection (9) and in each case has outlet openings (10).

7. The air-conditioning device according to one of the preceding claims, **characterised in that** the radiating plates (6) substantially entirely cover the pipes (2) of the pipe register on the side facing the room to be temperature-controlled.

8. The air-conditioning device according to one of claims 1 to 6, **characterised in that** the radiating plates (6) are arranged and configured such that radiating regions are formed between the radiating plates (6), the pipes (2) of the pipe register being directly in contact with the room to be temperature-controlled in said radiating regions.

9. The air-conditioning device according to one of the preceding claims, **characterised in that** the radiating plates (6) are connected to the pipes (2) of the pipe register and optionally connected, in particular welded, to transverse profiles.

## Revendications

1. Dispositif de climatisation pour conditionner et ventiler des pièces, comprenant une construction à surfaces rayonnantes au plafond qui présente plusieurs tubes (2) d'un registre de tubes traversés par un fluide caloporteur ainsi que des tôles rayonnantes (6) tournées vers la pièce à conditionner, dans lequel au moins un tronçon d'une tôle rayonnante (6) forme conjointement avec au moins un segment de canal (7), un logement entourant le registre de tubes au moins par tronçons qui est doté d'un raccordement de canal d'air (9) pour amener de l'air neuf dans le logement, et des ouvertures d'évacuation (10) tournées vers la pièce à conditionner dans au moins une des tôles rayonnantes (6) pour évacuer de l'air conditionné dans la pièce, **caractérisé en ce que** des oeillets de fixation (11) sont prévus sur des tôles rayonnantes (6) latérales pour fixer le dispositif de climatisation à un plafond d'une pièce à conditionner, et que l'au moins un raccordement de canal d'air (9) est en liaison d'écoulement avec un échangeur de chaleur pour préchauffer de l'air neuf amené au logement par de l'air évacué.

2. Dispositif de climatisation selon la revendication 1, **caractérisé en ce que** le logement est formé par plusieurs tôles rayonnantes (6) et par plusieurs segments de canal (7), dans lequel les segments de canal (7) sont prévus sur le côté de la tôle rayonnante (6) détourné de la pièce à conditionner.

3. Dispositif de climatisation selon la revendication 1 ou 2, **caractérisé en ce que** le logement est essentiellement étanche à l'air à l'exception du raccordement de canal d'air (9) et des ouvertures d'évacuation (10).

4. Dispositif de climatisation selon l'une des revendications précédentes, **caractérisé en ce qu'**une couche isolante (12) est prévue dans le logement, sur le côté du registre de tubes détourné des tôles rayonnantes (6).

5. Dispositif de climatisation selon l'une des revendications précédentes, **caractérisé en ce que** les ouvertures d'évacuation (10) sont disposées sur au moins un côté du logement détourné du raccordement de canal d'air (9).

6. Dispositif de climatisation selon l'une des revendications précédentes, **caractérisé en ce que** la construction à surfaces rayonnantes au plafond a plusieurs logements et/ou plusieurs tronçons d'un logement au moins séparés l'un de l'autre par une presque étanchéité à l'air, sachant que chaque logement, respectivement chaque tronçon, présente chacun un raccordement de canal d'air (9) et chacun des ouvertures d'évacuation (10).

7. Dispositif de climatisation selon l'une des revendications précédentes, **caractérisé en ce que** les tôles rayonnantes (6) couvrent essentiellement complètement les tubes (2) du registre de tubes sur le côté tourné vers la pièce à conditionner.

8. Dispositif de climatisation selon l'une des revendications 1 à 6, **caractérisé en ce que** les tôles rayonnantes (6) sont ainsi agencées et formées que des zones de rayonnement sont formées entre les tôles rayonnantes (6), dans lesquelles les tubes (2) du registre de tubes sont directement en contact avec la pièce à conditionner.

9. Dispositif de climatisation selon l'une des revendications précédentes, **caractérisé en ce que** les tôles rayonnantes (6) sont reliées aux tubes (2) du registre de tubes, ainsi que le cas échéant par des profilés transversaux, en particulier soudées.
